(19) Europäisches Patentamt
European Patent Office
Office européen des brevets

(11) Veröffentlichungsnummer: 0 261 381 A2

# (12) EUROPÄISCHE PATENTANMELDUNG

(21) Anmeldenummer: 87111794.1

(22) Anmeldetag: 14.08.87

(51) Int. Cl.⁴: C08F 210/02, //(C08F210/02,220:34)

(30) Priorität: 26.08.86 DE 3628903

(43) Veröffentlichungstag der Anmeldung: 30.03.88 Patentblatt 88/13

(84) Benannte Vertragsstaaten: AT BE CH DE ES FR GB IT LI NL

(71) Anmelder: BAYER AG
Konzernverwaltung RP Patentabteilung
D-5090 Leverkusen 1 Bayerwerk(DE)

(72) Erfinder: Waniczek, Helmut, Dr.
Wolfskaul 2
D-5000 Köln 80(DE)
Erfinder: Bartl, Herbert, Dr.
Eichendorffweg 10
D-5068 Odenthal(DE)
Erfinder: Herwig, Jens, Dr.
Nerzweg 2
D-5000 Köln 40(DE)

## (54) Ethylen und Alpha-Cyanacrylate enthaltende Copolymere.

(57) Die Erfindung betrifft Copolymere, die Ethylen und α-Cyanacrylate enthalten, sowie Verfahren zur Herstellung solcher Copolymere.

EP 0 261 381 A2

## Ethylen und α-Cyanacrylate enthaltende Copolymere

α-Cyanacrylate sind Monomere, die anionisch und radikalisch polymerisierbar sind. Sie werden wegen ihrer besonderen Eigenschaft, mit Wasser oder anderen Basen spontan nach einem anionischen Mechanismus zu polymerisieren, seit Jahrzehnten als sogenannte "Sekundenklebstoffe" verwendet. Andere Anwendungen als solche, welche sich aus der hohen anionischen Polymerisationsfreudigkeit ergeben, sind bisher nur wenige bekannt geworden.

Copolymere von α-Cyanacrylaten mit einer Reihe von Allyl-und Vinylverbindungen, hergestellt durch radikalische Copolymerisation, wurden zur Bestimmung der Copolymerisationsparameter verwendet. [J. B. Kinsinger et al., J. Appl. Polym. Sci., 9, 429 (1965); T. Otsu, B. Yamada, Makromol. Ch., 110, 297 (1967).]

Es gelang jedoch nicht, Olefine in größerem als äquimolarem Anteil mit α-Cyanacrylaten zu copolymerisieren. Einige Olefine sind überhaupt nicht reaktiv, und beim Versuch der Copolymerisation entsteht α-Cyanacrylat-Homopolymer.

Copolymere aus Ethylen und α-Cyanacrylaten sind bisher nicht bekannt.

Gegenstand der vorliegenden Erfindung sind Copolymere aus Ethylen und α-Cyanacrylaten. Unter α-Cyanacrylaten werden Ester der α-Cyanacrylsäure der Formel (I) verstanden,

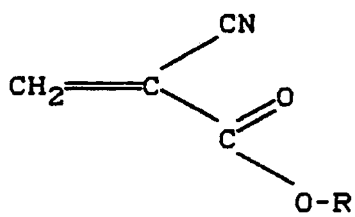

(I)

wobei der Rest R ein substituierter oder unsubstituierter, linearer, verzweigter oder cyclischer Alkylrest mit 1-20 C-Atomen ist. Beispiele für die erfindungsgemäß verwendeten α-Cyanacrylate sind Methyl-, Ethyl-, iso- oder n-Propyl-, n-, iso-oder tert.-Butyl-, Cyclohexyl-, 2-Ethyl-hexyl-, Ethoxiethyl-, Tetrahydrofurfuryl-, Allyl- oder Halogenalkyl-α-cyanacrylate. Selbstverständlich können auch deren Gemische verwendet werden.

Insbesondere Copolymere, die (a) Ethylen und (b) α-Cyanacrylate im Molverhältnis a:b > 1 enthalten, sind Gegenstand der vorliegenden Erfindung.

Ein weiterer Gegenstand der vorliegenden Erfindung ist ein Verfahren zur Herstellung von Copolymeren, die Ethylen und α-Cyanacrylate enthalten, das dadurch gekenn zeichnet ist, daß Ethylen und α-Cyanacrylate in Gegenwart von Radikalinitiatoren und gegebenenfalls weiteren Zusätzen bei erhöhtem Druck und erhöhter Temperatur polymerisiert werden.

Unter Radikalinitiatoren sind solche Verbindungen zu verstehen, die bei erhöhter Temperatur zu radikalischen Bruchstücken zerfallen können. Beispiele dafür sind bestimmte Azoverbindungen, Peroxide, Sauerstoff oder substituierte Diphenylethane.

Bevorzugt werden solche Radikalinitiatoren, die die anionische Polymerisation des α-Cyanacrylats selbst nicht starten. Beispiele dafür sind Azoverbindungen wie Azoisobuttersäuredinitril oder Azoisobuttersäurediester, Dialkylperoxide wie Di-tert.-butylperoxid, 2,2-Bis-(t-butylperoxi)butan oder Dicumylperoxid, Perketale wie 3,3,6,6,9,9-Hexamethyl-1,2,4,5-tetraoxo-cyclononan oder 1,1-Bis(t-butylperoxi)cyclohexan, Alkylacylperoxide wie tert.-Butyl-perneodecanoat, t-Amylperpivalat oder t-Butyl-perbenzoat, Diacylperoxide wie Diisononanoylperoxid, Dilaurylperoxid, Dibenzoylperoxid oder Bis-4-chlorbenzoylperoxid, Sulfonylperoxide wie Acetylcyclohexansulfonylperoxid, Percarbonate wie Diisopropylperoxodicarbonat, Diisotridecylperoxodicarbonat, Bis-(4-tert.-butylcyclohexyl)peroxodicarbonat oder Dicetylperoxodicarbonat. Kohlenwasserstoffe wie 3,4-Dimethyl-3,4-diphenylhexan oder 2,3-Dimethyl-2,3-diphenylbutan sind besonders geeignet.

Unter weiteren Zusätzen werden zum Beispiel Lösungsmittel verstanden oder die Polymerisationskinetik beeinflussende Substanzen, wie z. B. Regler. Als Lösungsmittel kommen vor allem solche in Frage, die die anionische Polymerisation der α-Cyanacrylate nicht starten. Dies sind aliphatische, cycloaliphatische oder aromatische Kohlenwasserstoffe, die substituiert oder unsubstituiert sein können.

Bevorzugt werden Lösungsmittel verwendet, welche eine niedrige Übertragungskonstante besitzen, wie beispielsweise aliphatische, cycloaliphatische und aromatische Kohlenwasserstoffe.

Besonders bevorzugt werden n-Hexan, Isooctan, Neopentan, Cyclohexan, Toluol, Ethylbenzol, Isopropylbenzol, t-Butylbenzol oder Chlorbenzol.

Die erfindungsgemäßen Polymere werden am besten bei erhöhtem Druck hergestellt. Dabei hat sich ein Druck von mehr als 50 bar als zweckmäßig erwiesen hat.

Bevorzugt ist ein Druck von mehr als 100 bar, besonders bevorzugt ein Druck von mehr als 500 bar. Ganz besonders bevorzugt ist ein Druck von mehr als 1.000 bar.

Unterhalb eines Drucks von 1.000 bar wird die Polymerisation vorzugsweise in Anwesenheit eines Lösungsmittels durchgeführt.

Eine obere Druckgrenze wird nicht durch das erfindungsgemäße Verfahren, sondern durch die technischen Möglich keiten festgelegt. Im allgemeinen wird der Druck weniger als 10.000 bar betragen.

Die erfindungsgemäßen Copolymere werden am besten bei erhöhter Temperatur hergestellt, wobei sich ein Temperaturbereich von 20° C bis 300° C bewährt hat. Bevorzugt wird eine Temperatur von 70° C bis 250° C. Besonders bevorzugt wird ein Temperaturbereich von 150° C bis 230° C.

Ein weiterer Gegenstand der vorliegenden Erfindung sind einheitliche, amorphe, elastomere Copolymere mit Monomereinheiten von (a) Ethylen, (b) $\alpha$-Cyanacrylat und (c) weiteren radikalisch copolymerisierbaren Monomeren im Molverhältnis [2 bis 200 (a)] : [m(b) + n(c)], wobei n = 0 bis 0.2, (m + n) = 1.0 und das Verhältnis von [(a)] : [(b) + (c)] von [2 bis 200] : [1] ist.

Besonders bevorzugt sind solche mit einem Verhältnis von [(a)] : [(b) + (c)] von [2 bis 20] : [1].

Weitere radikalisch copolymerisierbare Monomere (c) sind Olefine wie Propylen, Buten-1, Butadien, Isobuten, Norbornadien oder längerkettige $\alpha$-Olefine, Vinylverbindungen wie Vinylacetat, Vinyl-2-ethylhexanoat, Isopropenylacetat, Vinylbenzoat, Vinylchlorid, Vinylidenchlorid oder Vinylmethylsulfid, Styrole wie Styrol, $\alpha$-Methylstyrol, Vinyltoluol oder $\alpha$-Acetoxistyrol, Maleinsäure, Acrylsäure, Methacrylsäure und deren Ester wie Ethylacrylat, Methylmethacrylat, 2-Ethylhexylacrylat, Glycidylacrylat oder Ethoxiethylacrylat, Allylverbindungen wie Allylacetat, Allylchlorid oder Allylphenyl ether, Maleinsäureanhydrid, mehrfunktionelle Monomere wie Divinylbenzol, Acrylsäureanhydrid, Methacrylsäureanhydrid oder 1,4-Butandioldimethacrylat.

Bevorzugt werden als weitere radikalisch copolymerisierbare Monomere (c) solche der Formel (II)

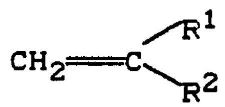

(II)

verwendet, wobei $R^1$
-COOH, $-CONH_2$, $-COOCH_2CH_2OH$,

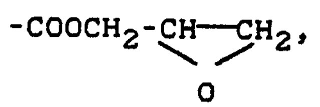

$-COOCH_2-CH=CH_2$, $-COOCH_2-CH_2Cl$, $-CONHCH_2CH=CH_2$ oder $-COOCH_2-CH_2-O-CH_2-CH_3$ und $R^2$ Wasserstoff oder Methyl bedeuten.

Die erfindungsgemäßen Copolymere sind je nach Zusammensetzung thermoplastisch oder elastisch, wonach sich auch ihre Verwendung richtet.

So sind jene erfindungsgemäßen Copolymere, welche aufgrund ihrer Zusammensetzung Elastomercharakter haben, vor allem zur Herstellung von Gummiartikeln geeignet, während die erfindungsgemäßen thermoplastischen Copolymere zur Herstellung von Spritzgußartikeln, Klebstoffen, Beschichtungen oder Folien geeignet sind.

Beispiele 1 bis 4

In einem kontinuierlich durchströmten stopfbuchslosen 700 ml-Hochdruckrührautoklaven mit idealer Rückvermischung wurden die in der Tabelle 1 aufgeführten Monomerströme durch Zugabe von PO (tert.-Butylperisooctanoat) bei einem Reaktionsdruck von 1.850 bar (Beispiel 2-4) bzw. 2.100 bar (Vergleichsbeispiel 1) copolymerisiert. In einem nachgeschalteten Entspannungsabscheider wurde das Copolymerisat von unumgesetzten Monomeren befreit. Die Reaktionstemperatur wurde über die Initiatormenge kontrolliert. Als Molekulargewichtsregler wurde bei Versuch 2 Propanal (PRAL) zur Absenkung der Molmassen zudosiert. Die Versuchsparameter und Produkteigenschaften sind in der Tabelle 1 dargestellt.

Beispiel 1 (Vergleichsbeispiel)

Der Initiatorverbrauch ist sehr hoch. Es besteht die Gefahr, daß das ACN, das selbst als Regler wirkt, im Autoklaven ausfällt. Dies hat zur Folge, daß in diesem Moment die Initiatormenge so hoch ist, daß es zu einer schlagartigen Polymerisation des Ethylens kommt (Explosionsgefahr).

Beispiele 2-4

Auch ECA wirkt wie Beispiele 3 und 4 zeigen, als Regler. Jedoch steigt der Initiatorverbrauch nur geringfügig an.

Tabelle 1

| Beispiel Nr. | Ethylen [kg/h] | Comonomer * [kg/h] | Druck [bar] | Temp. [°C] | Initiator PO [g/h] | MG-Regler ** [g/h] |
|---|---|---|---|---|---|---|
| 1 | 25 | ACN 0,729 | 2.100 | 200 | 24,7 | - - |
| 2 | 20 | ECA 0,302 | 1.850 | 230 | 2,1 | PRAL 12 |
| 3 | 20 | ECA 0,693 | 1.850 | 230 | 4,3 | - - |
| 4 | 20 | ECA 1,537 | 1.850 | 230 | 6,8 | - - |

| Beispiel Nr. | MFI*** [g/10'] | Copo-Ausstoß [kg/h] | Comonomer im Copolymer [Gew.-%] | $Q_{spez.}$**** [g/kg] |
|---|---|---|---|---|
| 1 | 7,6 | 3,2 | 22,8 | 7,7 |
| 2 | 23 | 2,6 | 13,8 | 0,81 |
| 3 | >100 | 3,0 | 19,6 | 1,43 |
| 4 | >100 | 3,4 | 33,0 | 2,0 |

* ACN Acrylnitril
ECA Ethylcyanacrylat
** PRAL Propanal
*** MFI Melt Flow Index
**** $Q_{spez.}$ spezifischer Initiatorverbrauch

## Ansprüche

1. Copolymere aus (a) Ethylen, (b) wenigstens einem α-Cyanacrylat und (c) gegebenenfalls einem oder mehreren, mit Ethylen und α-Cyanacrylaten radikalisch copolymerisierbaren Monomeren, wobei das molare Verhältnis von [(a)] : [(b) + (c)] von [2 bis 200] : [1] beträgt und (c) höchstens 20 Mol-% von [(b) + (c)] ausmacht.

2. Copolymere nach Anspruch 1, dadurch gekennzeichnet, daß die α-Cyanacrylate der Formel

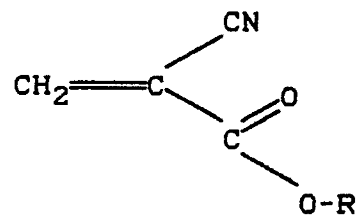

(I)

entsprechen, wobei R ein substituierter oder unsubstituierter, linearer, verzweigter oder cyclischer Alkylrest mit 1-20 C-Atomen ist.

3. Copolymere nach Anspruch 1, dadurch gekennzeichnet, daß
R ein $C_1$-$C_{20}$-Alkylrest ist.

4. Copolymere nach Anspruch 1, dadurch gekennzeichnet, daß (c) ausgewählt ist aus der Gruppe der Olefine, Vinylverbindungen, Styrole, der α,β-ungesättigten Mono-oder Polycarbonsäuren, ihrer Anhydride, Ester oder Amide mit Ausnahme von Cyanacrylaten und der Allylverbindungen.

5. Copolymere nach Anspruch 1, dadurch gekennzeichnet, daß (c) der Formel

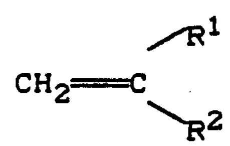

(II)

entspricht, wobei $R^1$
$-COOH$, $-CONH_2$, $-COOCH_2CH_2OH$,

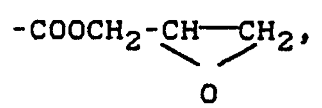

$-COOCH_2-CH=CH_2$, $-COOCH_2-CH_2Cl$, $-CONHCH_2CH=CH_2$ oder $-COOCH_2-CH_2-O-CH_2-CH_3$ und
$R^2$ Wasserstoff oder Methyl bedeuten.

6. Copolymere nach Anspruch 1, bestehend aus Ethylen und einem α-Cyanacrylat.

7. Verfahren zur Herstellung von Copolymeren gemäß Anspruch 1, dadurch gekennzeichnet, daß man (a) Ethylen, (b) wenigstens ein α-Cyanacrylat und (c) gegebenenfalls ein oder mehrere, mit Ethylen und α-Cyanacrylaten radikalisch copolymerisierbare Monomere in molaren Verhältnissen [(a)] : [(b) + (c)] von [2 bis 20] : [1], wobei (c) höchstens 20 Mol-% von [(b) + (c)] ausmacht, in Gegenwart eines Initiators Drücken von wenigstens 50 bar aussetzt.

8. Verfahren zur Herstellung von Copolymeren gemäß Anspruch 1, dadurch gekennzeichnet, daß Ethylen, Cyanacrylate und gegebenenfalls weitere radikalisch polymerisierbare Monomere kontinuierlich bei Drücken von mehr als 1.000 bar und Temperaturen oberhalb 150° C copolymerisiert werden.